# NEUE EUROPÄISCHE PATENTSCHRIFT

(11) **EP 1 625 283 B2**
(45) Veröffentlichungstag und Bekanntmachung des Hinweises auf die Entscheidung über den Einspruch: **02.09.2015**
(45) Hinweis auf die Patenterteilung: 09.05.2012
(21) Anmeldenummer: 04728101.9
(22) Anmeldetag: 17.04.2004
(51) Int. Cl.: F01D 11/12, C23C 4/10, F01D 5/28, F01D 5/20

(54) **EINLAUFBELAG FÜR GASTURBINEN**
RUNNING-IN COATING FOR GAS TURBINES
GARNITURE DE RODAGE POUR TURBINES A GAZ

(30) Priorität: 17.05.2003 DE 10322339
(43) Veröffentlichungstag der Anmeldung: 15.02.2006
(73) Patentinhaber: MTU Aero Engines GmbH, 80995 München (DE)
(72) Erfinder: FRIEDRICH, Christian, 81477 München (DE)
(74) Vertreter: Lang, Christian
(86) Internationale Anmeldenummer: PCT/DE2004/000808
(87) Internationale Veröffentlichungsnummer: WO 2004/104378

(56) Entgegenhaltungen:
- EP-A- 1 060 281
- EP-A- 1 256 636
- EP-A1- 0 837 222
- EP-A2- 1 375 696
- DE-A- 3 032 127
- DE-C1- 19 807 163
- US-A- 4 299 865
- US-A- 4 936 745

## Beschreibung

Die Erfindung betrifft eine Gasturbine mit einem Einlaufbelag gemäß dem Oberbegriff des Patentanspruchs 1.

Gasturbinen, wie zum Beispiel Flugtriebwerke, umfassen in der Regel mehrere rotierende Laufschaufeln sowie mehrere feststehende Leitschaufeln, wobei die Laufschaufeln zusammen mit einem Rotor rotieren und wobei die Laufschaufeln sowie die Leitschaufeln von einem feststehenden Gehäuse der Gasturbine umschlossen sind. Zur Leistungssteigerung eines Flugtriebwerks ist es von Bedeutung, alle Komponenten und Subsysteme zu optimieren. Hierzu zählen auch die sogenannten Dichtsysteme in Flugtriebwerken. Besonders problematisch ist bei Flugtriebwerken die Einhaltung eines minimalen Spalts zwischen den rotierenden Laufschaufeln und dem feststehenden Gehäuse einer Hochdruckgasturbine. Bei Hochdruckgasturbinen treten nämlich die größten absoluten Temperaturen sowie Temperaturengradienten auf, was die Spalthaltung der rotierenden Laufschaufeln zum feststehenden Gehäuse des Verdichters erschwert. Dies liegt unter anderem auch darin begründet, dass bei Verdichterlaufschaufeln auf Deckbänder, wie sie bei Turbinen verwendet werden, verzichtet wird. Wie bereits erwähnt, verfügen Laufschaufeln im Verdichter über kein Deckband. Daher sind Enden bzw. Spitzen der rotierenden Laufschaufeln beim sogenannten Anstreifen in das feststehende Gehäuse einem direkten Reibkontakt mit dem Gehäuse ausgesetzt. Ein solches Anstreifen der Spitzen der Laufschaufeln in das Gehäuse wird bei Einstellung eines minimalen Radialspalts durch Fertigungstoleranzen hervorgerufen. Da durch den Reibkontakt der Spitzen der rotierenden Laufschaufeln an denselben Material abgetragen wird, kann sich über den gesamten Umfang von Gehäuse und Rotor eine unerwünschte Spaltvergrößerung einstellen. Um dies zu vermeiden ist es aus dem Stand der Technik bereits bekannt, die Enden bzw. Spitzen der rotierenden Laufschaufeln mit einem harten Belag oder mit abrasiven Partikeln zu panzern. Eine andere Möglichkeit, den Verschleiß an den Spitzen der rotierenden Laufschaufeln zu vermeiden und für eine optimierte Abdichtung zwischen den Enden bzw. Spitzen der rotierenden Laufschaufeln und dem feststehenden Gehäuse zu sorgen, besteht in der Beschichtung des Gehäuses mit einem sogenannten Einlaufbelag. Bei einem Materialabtrag an einem Einlaufbelag wird der Radialspalt nicht über den gesamten Umfang vergrößert, sondern in der Regel nur sichelförmig. Hierdurch wird ein Leistungsabfall des Triebwerks vermieden. Gehäuse mit einem Einlaufbelag sind aus dem Stand der Technik bekannt.

Die EP 0765 951 B1 offenbart einen Einlaufbelag für eine Gasturbine, bei welchem die äußere Schicht bzw. Deckschicht des Einlaufbelags, die mit den Spitzen der Laufschaufeln in Kontakt steht, aus Zirkondioxid hergestellt ist. Ein weiterer Einlaufbelag ist aus dem US-Patent 4,936,745 bekannt.

Aus der EP-A-1 060 281 ist es bekannt, ein Material mit Magnetoplumbit-Struktur, vorzugsweise Lanthan-Hexaaluminat, als Wärmedämmmaterial zu verwenden. Wenn die Struktur so eingestellt wird, dass alle Stellen im Kristallgitter besetzt sind, ist diese besonders beständig gegen ein Zusammensintern bei hohen Temperaturen, weshalb sie sich u. a. als Wärmedämmschicht auf Turbinenschaufeln eignet. Das Dokument gibt keine Hinweise auf andere Anwendungen als zur Wärmedämmung.

Hiervon ausgehend liegt der vorliegenden Erfindung das Problem zu Grunde, eine Gasturbine mit einem neuartigen Einlaufbelag zu schaffen.

Dieses Problem wird dadurch gelöst, dass die Gasturbine einen Einlaufbelag aufweist, der durch die Merkmale des kennzeichnenden Teils des Patentanspruchs 1 weitergebildet ist.

Der Einlaufbelag der erfindungsgemäßen Gasturbine dient der Abdichtung eines radialen Spalts zwischen einem feststehenden Gehäuse der Gasturbine und rotierenden Laufschaufeln derselben. Der Einlaufbelag ist an dem Gehäuse angebracht. Erfindungsgemäß ist der Einlaufbelag einschichtig ausgebildet, wobei die eine Schicht des Einlaufbelags aus einem Material mit Magnetoplumbit-Struktur, vorzugsweise aus Lanthan-Hexaaluminat, hergestellt ist. Im Sinne der Erfindung wird demnach vorgeschlagen, die äußere Schicht des Einlaufbelags, die mit den rotierenden Laufschaufeln zuerst in Kontakt kommt, nicht mehr aus Zirkondioxid sondern vorzugsweise aus Lanthan-Hexaaluminat herzustellen.

Bevorzugte Weiterbildungen der Erfindung ergeben sich aus den abhängigen Unteransprüchen und der nachfolgenden Beschreibung.

Nachfolgend werden Ausführungsbeispiele der Erfindung, ohne hierauf beschränkt zu sein, an Hand der Zeichnung näher erläutert. In der Zeichnung zeigt:
- Fig. 1:: eine stark schematisierte Darstellung einer Laufschaufel einer Gasturbine zusammen mit einem Gehäuse der Gasturbine und mit einem auf dem Gehäuse angeordneten Einlaufbelag, und
- Fig. 2:: eine stark schematisierte Darstellung einer Laufschaufel einer Gasturbine zusammen mit einem Gehäuse der Gasturbine und mit einem auf dem Gehäuse angeordneten, alternativen Einlaufbelag.

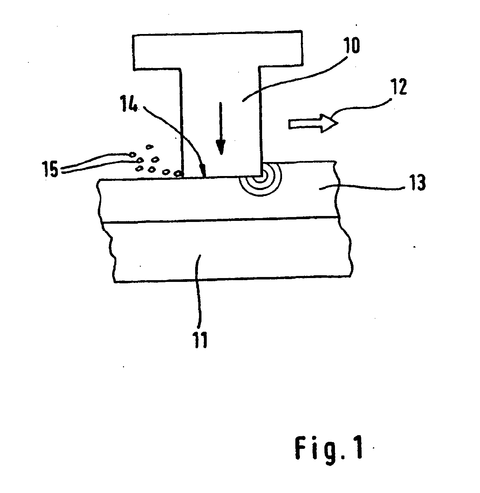

Fig. 1 zeigt stark schematisiert eine rotierende Laufschaufel 10 einer Gasturbine, die gegenüber einem feststehenden Gehäuse 11 in Richtung des Pfeils 12 rotiert. Auf dem Gehäuse 11 ist ein Einlaufbelag 13 angeordnet.

Der Einlaufbelag 13 dient der Abdichtung eines radialen Spalts zwischen einer Spitze bzw. einem Ende 14 der rotierenden Laufschaufel 10 und dem feststehenden Gehäuse 11. Die Anforderungen, die an einen solchen Einlaufbelag gestellt werden, sind sehr komplex. So muss der Einlaufbelag ein optimiertes Abriebverhalten aufweisen, d.h. es muss eine gute Spanbildung und Entfernbarkeit des Abriebs gewährleistet sein. Weiterhin darf kein Materialübertrag auf die rotierenden Laufschaufeln 10 erfolgen. Der Einlaufbelag 13 muss des weiteren einen niedrigen Reibwiderstand aufweisen. Des weiteren darf sich der Einlaufbelag 13 beim Anstreifen durch die rotierenden Laufschaufeln 10 nicht entzünden. Als weitere Anforderungen, die an den Einlaufbelag 13 gestellt werden, seinen hier die Erosionsbeständigkeit, Temperaturbeständigkeit, Thermowechselbeständigkeit, Korrosionsbeständigkeit gegenüber Schmierstoffen und Meerwasser exemplarisch genannt.

Fig. 1 verdeutlicht, dass bedingt durch die beim Betrieb der Gasturbine auftretenden Fliehkräfte und die Erwärmung der Gasturbine die Enden 14 der Laufschaufeln 10 mit dem Einlaufbelag 13 in Kontakt kommen und so ein Abrieb 15 freigesetzt wird. Dieser pulverisierte Abrieb 15 darf keine Beschädigungen an den rotierenden Laufschaufeln 10 hervorrufen.

Es liegt nun im Sinne der hier vorliegenden Erfindung, dass der Einlaufbelag 13 aus aus einem Material mit Magnetoplumbit-Struktur hergestellt ist, im gezeigten Ausführungsbeispiel aus Lanthan-Hexaaluminat. Im Ausführungsbeispiel der Fig. 1 handelt es sich um einen einschichtigen Einlaufbelag 13, wobei die einzige Schicht des Einlaufbelags 13 aus dem Lanthan-Hexaaluminat hergestellt ist und unmittelbar auf das Gehäuse 11 aufgebracht ist. Es liegt demnach im Sinne der hier vorliegenden Erfindung, anstelle des aus dem Stand der Technik bekannten Zirkondioxids Lanthan-Hexaaluminat für die Herstellung der äußeren Schicht von Einlaufbelegen zu verwenden.

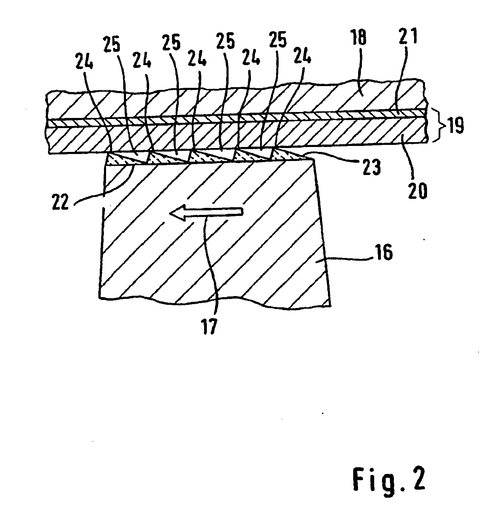

Fig. 2 zeigt ein Beispiel, das nicht zur Erfindung gehört. So zeigt Fig. 2 wiederum eine rotierende Laufschaufel 16, die im Sinne des Pfeils 17 relativ zu einem feststehenden Gehäuse 18 rotiert. Auf dem feststehenden Gehäuse 18 ist wiederum ein Einlaufbelag 19 angeordnet.

Im Unterschied zum Ausführungsbeispiel der Fig. 1 ist der Einlaufbelag 19 des Ausführungsbeispiels gemäß der Fig. 2 jedoch nicht einschichtig, sondern mehrschichtig ausgebildet. Eine äußere Schicht 20 des Einlaufbelags 19, welche zuerst mit den Laufschaufeln 16 in Kontakt tritt, ist erfindungsgemäß wieder aus Lanthan-Hexaaluminat hergestellt.

Zusätzlich ist zwischen der äußeren Schicht 20 und dem Gehäuse 18 eine innenliegende Schicht 21 vorgesehen. Bei der innenliegenden Schicht 21 handelt es sich um eine haftvermittelnde Schicht, um die Haftung zwischen dem Gehäuse 18 und der äußeren Schicht 20 zu verbessern. Die innenliegenden Schicht 21 zur Haftvermittlung kann metallisch ausgebildet sein.

Zwischen die haftvermittelnde, innenliegende Schicht 21 und die äußere Schicht 20 aus Lanthan-Hexaaluminat kann eine weitere Zwischenschicht (nicht gezeigt) aus Zirkondioxid angeordnet sein. Diese Zwischenschicht aus Zirkondioxid dient der Verbessung der Eigenschaften des Schichtverbunds, insbesondere der Erhöhung der Lebensdauer.

An dieser Stelle sei darauf hingewiesen, dass selbstverständlich auch drei- oder mehrschichtige Einlaufbelege im Sinne der Erfindung vorgesehen sein können. Im Sinne der Erfindung soll jedoch die äußere Schicht eines mehrschichtigen Einlaufbelags, welche als erste mit den rotierenden Laufschaufeln der Gasturbine in Kontakt tritt, aus Lanthan-Hexaaluminat hergestellt sein.

Im Ausführungsbeispiel der Fig. 2 ist an dem Ende 22 bzw. der Spitze der rotierenden Laufschaufel 16 ein sogenannter Anlaufbelag 23 vorgesehen. Bei diesem Anlaufbelag 23 handelt es sich um eine Panzerung der Laufschaufelspitzen. Im gezeigten Ausführungsbeispiel umfasst der Anlaufbelag 23 mehrere keilförmig ausgebildete Elemente 24, wobei zwischen zwei benachbarten Elementen 24 des Anlaufbelags 23 Freiräume 25 ausgebildet sind. Insofern zeigt Fig. 2 ein Dichtsystem für eine Gasturbine, bei welchem ein auf dem Gehäuse 18 der Gasturbine aufgebrachter, erfindungsgemäßer Einlaufbelag 19 mit einem auf den Laufschaufelspitzen angeordneten Anlaufbelag 23 kombiniert wird.

Beiden Ausführungsbeispielen der Fig. 1 und 2 ist das erfindungsgemäße Prinzip gemeinsam, eine äußere Schicht eines Einlaufbelags, die mit Spitzen der rotierenden Laufschaufeln in Kontakt tritt, aus Lanthan-Hexaaluminat herzustellen.

Mit einem solchen Einlaufbelag lassen sich besonders positive Eigenschaften erzielen. So stellt sich ein besonders gutes Abriebverhalten des Einlaufbelags ein. Auch die anderen Anforderungen an den Einlaufbelag werden erfüllt bzw. positiv beeinflusst. So wird zum Beispiel die Temperaturbeständigkeit und Lebensdauer der Einlaufbeläge verbessert.

An dieser Stelle sei darauf hingewiesen, dass der erfindungsgemäße Einlaufbelag mithilfe des thermischen Spritzens auf die metallische Oberfläche des Gehäuses aufgebracht wird. Details des thermischen Spritzens sind dem hier angesprochenen Fachmann geläufig.

## Patentansprüche

1. Gasturbine mit einem Einlaufbelag (13; 19), der zur Abdichtung eines radialen Spalts zwischen einem Gehäuse (11; 18) und rotierenden Laufschaufeln (10; 16) dient, wobei der Einlaufbelag (13; 19) an dem Gehäuse (11; 18) angebracht ist,
**dadurch gekennzeichnet, dass**
der Einlaufbelag (13; 19) einschichtig ausgebildet ist, wobei die eine Schicht des Einlaufbelags (13; 19) aus einem Material mit Magnetoplumbit-Struktur hergestellt ist.

2. Gasturbine nach Anspruch 1,
**dadurch gekennzeichnet, dass**
das Material mit Magnetoplumbit-Struktur als Lanthan-Hexaaluminat ausgeführt ist.

## Claims

1. A gas turbine having a run-in coating (13; 19) which is used to seal a radial gap between a housing (11; 18) and rotating moving blades (10; 16), wherein the run-in coating (13; 19) is provided on the housing (11; 18), **characterized in that** the run-in coating (13; 19) is formed in one layer, wherein the one layer of the run-in coating (13; 19) is produced from a material with a magnetoplumbite structure.

2. A gas turbine according to claim 1, **characterized in that** the material with a magnetoplumbite structure is realized as lanthanum hexaaluminate.

## Revendications

1. Turbine à gaz avec une garniture de rodage (13; 19), qui assure l'étanchéité d'une fente radiale entre une enceinte (11; 18) et des aubes mobiles tournantes (10; 16), dans laquelle la garniture de rodage (13; 19) est disposée sur l'enceinte (11; 18), **caractérisée en ce que** la garniture de rodage (13; 19) est réalisée en une couche, dans laquelle la une couche de la garniture de rodage (13; 19) est fabriquée en un matériau présentant une structure magnétoplombite.

2. Turbine à gaz selon la revendication 1, **caractérisée en ce que** le matériau avec une structure magnétoplombite est constitué par l'hexaaluminate de lanthane.
